# EUROPEAN PATENT SPECIFICATION

(11) **EP 3 394 475 B1**
(45) Date of publication and mention of the grant of the patent: **28.08.2019**
(21) Application number: 16826707.8
(22) Date of filing: 22.12.2016
(51) Int. Cl.: F16G 5/16

(54) **TRANSVERSE ELEMENT FOR A DRIVE BELT, DRIVE BELT AND METHOD FOR MANUFACTURING SUCH A TRANSVERSE ELEMENT**
QUERELEMENT FÜR EINEN ANTRIEBSRIEMEN, ANTRIEBSRIEMEN UND VERFAHREN ZUR HERSTELLUNG SOLCH EINES QUERELEMENTS
ÉLÉMENT TRANSVERSAL POUR COURROIE DE TRANSMISSION, COURROIE DE TRANSMISSION ET PROCÉDÉ DE FABRICATION D'UN TEL ÉLÉMENT TRANSVERSAL

(30) Priority: 22.12.2015 NL 1041640
(43) Date of publication of application: 31.10.2018
(73) Proprietor: Robert Bosch GmbH, 70442 Stuttgart (DE)
(72) Inventor: CREBOLDER, Cornelia Adriana Elizabeth, 4706WG Roosendaal (NL); TRAN, Minh-Duc, 5348KX Oss (NL); PENNINGS, Bert, 5052CH Goirle (NL); DERKS, Michel Joseph Marie, 5252BD Vlijmen (NL); HUYSMANS, Ludovic Peter Willem, 3910 Neerpelt (BE); BRANDSMA, Arjen, 5045WN Tilburg (NL); TUERLINGS, Henricus Adrianus Antonius Maria, 5000AM Tilburg (NL); RAJA, Hariharan, 5000AM Tilburg (NL)
(74) Representative: Plevier, Gabriël Anton Johan Maria
(86) International application number: PCT/EP2016/025189
(87) International publication number: WO 2017/108206

(56) References cited:
- WO-A1-2009/076999
- WO-A1-2010/062167
- WO-A1-2011/019270

## Description

The present disclosure relates to a transverse element component of a drive belt for use in a continuously variable transmission according to the preamble of the following claim 1. This particular type of drive belt and the transmission wherein it is typically applied are well known in the art, for example from the European patents EP-A-0 626 526 and EP-A-1 167 829 respectively.

The known drive belt comprises a number of such transverse elements that are made from steel and that are slideably included in the drive belt relative to the circumference of an endless tensile element thereof that primarily has the function of confining and guiding the transverse element components. Typically, the endless tensile element is composed of two sets of a number of mutually nested, i.e. radially stacked flexible metal rings. Typically also, the transverse elements are each provided with a slot, wherein a part of the endless tensile element is accommodated.

In the known transmission, a driving power is transferred from one pulley thereof by means of the drive belt that is arranged between and around the pulleys, while being clamped between two conical discs of each pulley. At least one such pulley disc of each pulley is provided axially moveable relative to the respective other one pulley disc on a shaft of the pulley by means of an actuator thereof. As a result, the drive belt, and in particular the transverse element components thereof, can be clamped between the pulley discs of both pulleys such that a rotation of a first or driving pulley is transferred to the second or driven pulley via the drive belt. The transfer of the driving power between each pulley and the drive belt takes place by means of friction, whereto the transverse elements on either lateral, i.e. axial side thereof are provided with a contact face for arriving into contact with a pulley disc. The contact faces of a transverse element are mutually oriented at an angle that essentially matches the angle of the V-shaped groove defined by and between the conical discs of each pulley. Typically, the contact faces are provided with low lying areas, such as grooves or holes for receiving a lubricating and/or cooling fluid that is typically applied in the known transmission and that is forced out from in-between the (higher) parts of the contact faces and the pulley discs that arrive in physical friction contact during operation of the transmission. It is imperative for the proper functioning and durability of the transmission that the transverse elements are resistant both to wear and to fatigue (fracture).

The fatigue strength of the transverse element is determined by the shape thereof that is generally optimized in terms of the stress levels and stress amplitudes that occur during operation of the drive belt. Furthermore, the transverse elements may be provided with a compressive residual stress in a surface layer thereof by subjecting these to the known deburring process of stone tumbling after they have been cut from basic material and quench hardened. By such compressive residual stress, the initiation and/or growth of micro cracks from, in particular, surface defects are known to be suppressed, thus improving the fatigue strength thereof.

Furthermore, for limiting a wear rate of the contact faces of the transverse element to a level that is suitable or at least acceptable in the typical automotive application of the transmission, it is known to provide the transverse elements with a material hardness of at least 58 on the Rockwell hardness C-scale (HRC). This hardness value is realized by producing the transverse elements from a carbon containing steel basic material and by quench hardening the steel as part of the production process of the transverse elements. An example of such a known production process is provided by the European patent publication EP-A-1 233 207. The carbon content of the steel basic material normally lies in the range between 0.6 and 1.2% by weight (wt.%). For example, DIN 1.2003, i.e. 75Cr1 steel is often used as the basic material for the transverse elements.

The conventional hardening process includes the steps of heating the steel to above its so-called austenitizing temperature (e.g. above ±780 °C in case of DIN 1.2003 steel), for transforming the crystalline structure thereof from ferrite into austenite, and of subsequent rapid cooling, i.e. of quenching, for transforming the austenite phase into martensitic phase, at least in part. Thereafter, the steel is typically subjected to the further process step of tempering, i.e. of heating the steel to a moderate temperature (e.g. of around 200 °C) for increasing the ductility and toughness thereof and thus to bring the fatigue strength of the quench hardened steel at the required level. As a result of tempering process step also the hardness is reduced as compared to the hardness value immediately after the process step of quenching. The thus hardened steel has a micro or crystalline structure of mainly martensitic phase with some retained austenite being present as well, typically, however, only in the small amount of less than 20 % by volume (vol.%).

It is noted that in the industrial, mass production of work pieces, such as the present transverse elements, the actual processing temperature in austenitizing is set to a value substantially above the said austenitizing temperature in order to heat and austenitizing the work pieces through and through relatively quickly, in particular in case the work pieces are processed (i.e. austenitized) batch-wise in a gas filled oven or furnace. For example, in such process, a processing temperature above 870 °C is normally applied for the austenitizing of transverse elements made from DIN 1.2003 steel.

The above known processes provide the transverse elements with a considerable resistance against wear, as well as a considerable fatigue strength. Still, it remains an ever present desire in the art to further reduce wear and/or to further increase fatigue strength of the transverse elements. On the one hand, the robustness and service life of the transmission as a whole may be improved thereby, on the other hand the driving power to be transferred by the transmission may be improved and/or the transmission may be miniaturized.

Although, the wear resistance of the transverse element can in principle be improved further by increasing the hardness of the transverse elements, for example by fine-tuning the composition of the steel basic material or the process parameters of the quench hardening process, such additional hardness is associated with an unfavorable decrease in the ductility and ultimately the fatigue strength of the transverse elements. A hardness value of around 62 to 64 HRC is normally considered to represent the optimum in these respects. Alternatively, as taught by the international patent publication WO2009/076999 A1, the transverse element can be case-hardened to provide the surface layer thereof with such additional hardness. According to WO2009/076999 A1, by case-hardening the transverse elements, for example by carburizing these during the said austenizing thereof, they can cope with the wear and tear of the frictional contact with the pulley discs even if the hardness of the core material thereof is allowed to reduce by tempering after quench hardening.

According to the present disclosure, it was discovered that the fatigue strength of the transverse element can be favorably improved by modifying the hardening process in an unexpected way. In particular according to the present disclosure, the dissolution of iron carbide particles (e.g. Fe₃C, FeₓCr_{y}C) that normally occurs in the hardening process step of austenitizing is to be suppressed. Such iron carbides are present throughout the steel matrix of the basic material, but dissolve and generate interstitial carbon atoms at elevated temperature, such as is applied during austenitizing. Conventionally, the dissolution of iron carbides is aimed for in the hardening process, because the dissolved carbon stabilizes the martensitic phase after quenching and provides additional hardness to the steel, i.e. to the transverse element. Also according to the present disclosure, since such additional hardness is otherwise still required for the wear resistance of the transverse element, the surface material thereof is enriched to a certain extent with carbon from another source than the dissolution of the iron carbides, namely from the outside, e.g. from the gas atmosphere applied in austenitizing.

As a result of the above two measures, i.e. by largely avoiding the dissolution of iron carbides in the bulk of the material of the transverse element, while introducing additional carbon atoms into the surface material thereof, this transverse element is not only provided with a hard and wear resistant surface, but favorably also with a noticeable gradient in the concentration of dissolved carbon, which concentration reduces from the surface towards the core of the transverse elements. Whereas, such carbon concentration gradient is not necessarily sought after in the conventional hardening process, nor in the known carburizing process, in the case of the transverse element -and if controlled appropriately-it was found to improve the fatigue strength thereof by effecting a compressive residual stress in a surface layer of the transverse element. A suitable value of the compressive residual stress has a value in the range between negative 30 and negative 80 N/mm², e.g. around -50 N/mm².

This latter fatigue strength improvement is unexpected, since a compressive residual stress of similar magnitude and effect is generally already realized with the known stone tumbling process. However, according to the present disclosure, the stones applied in stone tumbling are generally too big for easily entering inside the slot of the transverse elements. Therefore, the surface parts of the transverse element that define the slot are impacted by the tumbling stones to a lesser extent than other surface parts thereof and hardly any compressive residual stress is generated therein in the stone tumbling process. In particular in these latter surface parts, the said gradient in the concentration of dissolved carbon in accordance with the present disclosure generates an advantageous compressive residual stress nonetheless.

It is noted that both the said carbon concentration gradient and the said residual stress level cannot be easily measured directly, at least not with high accuracy. However, it is possible to link the said (local) concentration of dissolved carbon to the (local) hardness of the transverse element, i.e. of the steel whereof it is made. In particular, a change in the carbon concentration can be related to a measured change in the hardness value of the steel. Within the context of the present disclosure, a suitable difference of the hardness of the transverse element at its surface and at its core amounts to at least 60 HV0.1 (i.e. so-called Vickers hardness measured with a 100 gram weight applied) and in particular has a value in the range between 60 and 90 HV0.1, more in particular amounts to around 75 HV0.1.

It is further noted that the process of enriching the surface material of a steel work piece with carbon from an external source is as such known, in particular by the name of carburizing. In the carburizing process, the work piece is austenitized under a gas atmosphere including a carbon containing endo(-thermic) gas such as carbon-monoxide. Typically, the carbon potential of the gas atmosphere is controlled to a value considerably above the carbon potential of the work piece in question for realizing a highly effective carburization in a short time.

In such known carburizing process a concentration gradient of dissolved carbon will thus be created by the introduction of carbon atoms into the surface layer from the process gas atmosphere. However, according to the technical insights underlying the present disclosure, this latter phenomenon is not relevant for and/or is hardly noticeable even in view of the considerable amount of carbon that is released into the microstructure by the said dissolution of the iron carbide particles. Therefore, the known concentration gradient can be considered insignificant and, in particular, does not provide the surface layer with the compressive residual stress that is aimed for by the present disclosure. In accordance with the present disclosure, in contrast with such known carburizing process and in order to realize the presently desired effect, a relatively mild carburizing process is performed on the transverse element by applying a process atmosphere with a comparatively low carbon potential of 15 to 25% above the carbon potential -expressed as in carbon content in % by weight- of the steel in question, in particular around 20% above the latter carbon potential.

Further in accordance with the present disclosure and in particular in order to retain the above-mentioned carbon concentration gradient and realize the above-mentioned compressive residual stress, i.e. by providing a mild carburizing process with a minimal dissolution of iron carbides, carburization is carried out at a minimal temperature, e.g. 2.5 to 10% above the austenite temperature of the steel in question, in particular around 5% above such austenite temperature, and/or for a minimal period of time, i.e. just long enough to complete the transformation from ferrite into austenite also in the core of the transverse element.

In the particular case of the batch-wise, gas carburizing of the transverse elements made from 75Cr1 steel, a suitable carburizing process temperature is chosen in a range from 800 to 850 degrees Centigrade, more in particular in-between 835 and 845 °C and/or a suitable carbon monoxide concentration in the process atmosphere is chosen in a range from 15 to 25 vol.%, more in particular in-between 18 and 20 vol.%, in order to realize the required carbon potential just slightly above the carbon potential of the steel in question and/or a suitable process duration is chosen in a range from 5 to 25 minutes, more in particular in-between 10 and 20 minutes.

The above discussed principles and features of the novel transverse element and its proposed manufacturing method will now be elucidated further along a drawing in which:
Figure 1 provides a schematically depicted example of the well-known continuously variable transmission provided with two pulleys and a drive belt;
Figure 2 provides a schematically depicted cross-section of the known drive belt incorporating steel transverse elements and a tensile element;
Figure 3 schematically indicates the three stages of the conventional quench hardening process that is applied as part of the overall manufacturing method of the transverse element;
Figure 4 schematically illustrates the effect of conventional carburizing on the crystal structure of the transverse element as part of the known quench hardening process;
Figure 5 schematically illustrates the relevant aspect of the crystalline structure of a novel transverse element in accordance with the present disclosure; and
Figure 6 provides a graph of hardness measurement results in relation to known transverse elements and transverse elements in accordance with the present disclosure.

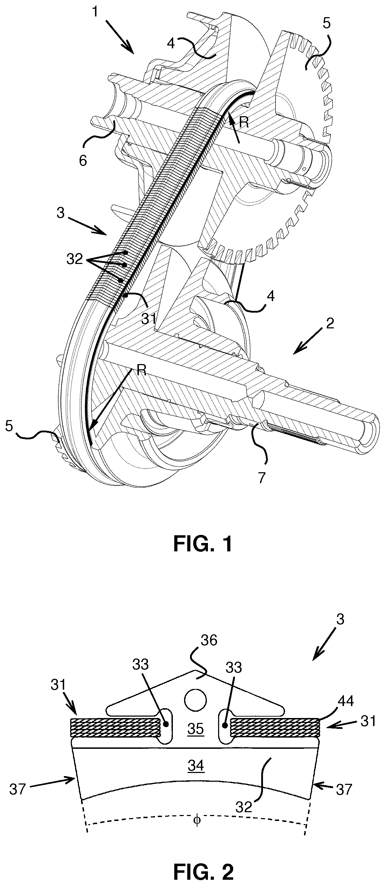

Figure 1 shows the central parts of a known continuously variable transmission or CVT that is commonly applied in the drive-line of motor vehicles between the engine and the driven wheels thereof. The transmission comprises two pulleys 1, 2 that are each provided with a pair of conical pulley discs 4, 5 mounted on a pulley shaft 6 or 7, between which pulley discs 4, 5 a predominantly V-shaped circumferential pulley groove is defined. At least one pulley disc 4 of each pair of pulley discs 4, 5, i.e. of each pulley 1, 2, is axially moveable along the pulley shaft 6, 7 of the respective pulley 1, 2. A drive belt 3 is wrapped around the pulleys 1, 2, located in the pulley grooves thereof for transmitting a rotational movement and an accompanying torque between the pulley shafts 6, 7.

The transmission generally also comprises activation means that -during operation-impose on the said axially moveable pulley disc 4 of each pulley 1, 2 an axially oriented clamping force that is directed towards the respective other pulley disc 5 of that pulley 1, 2, such that the drive belt 3 is clamped between these discs 4, 5 of the pulleys 1, 2. These clamping forces not only determine a friction force between the drive belt 3 and the respective pulleys 1, 2, but also a radial position R of the drive belt 3 at each pulley 1, 2 between the pulley discs 4, 5 thereof, which radial position(s) R determine a speed ratio of the transmission between the pulley shafts 6, 7 thereof.

An example of a known drive belt 3 is shown in more detail in figure 2, in a cross-section thereof facing in its circumference direction. The drive belt 3 incorporates an endless tensile element 31 in the form of two sets of flat and thin, i.e. of ribbon-like, flexible metal rings 44. The drive belt 3 further comprises a number of transverse elements 32 that are mounted on the tensile element 31 along the circumference thereof. In this particular example, each set of rings 44 is received in a respective recess or slot 33 defined by the transverse elements 32 on either lateral side thereof, i.e. on either axial side of a central part 35 of the transverse elements 32. The slots 33 of the transverse element 32 are located in-between a bottom part 34 and a top part 36 of the transverse element 32, as seen in radial direction relative to the drive belt 3 as a whole.

On the axial sides of the said bottom part 34 thereof, the transverse elements 32 are provided with contact faces 37 for arriving in friction contact with the pulley discs 4, 5. The contact faces 37 of each transverse element 32 are mutually oriented at an angle φ that essentially matches an angle of the V-shaped pulley grooves. Thus, the transverse elements 32 take-up the said clamping force, such that when an input torque is exerted on the so-called driving pulley 1, friction between the discs 4, 5 and the belt 3 causes a rotation of the driving pulley 1 to be transferred to the so-called driven pulley 2 via the likewise rotating drive belt 3 or vice versa.

During operation in the CVT the transverse element 32 components of the drive belt 3 are intermittently clamped between the respective pairs of pulley discs 4, 5 of the pulleys 1, 2. Although such clamping obviously results in a compression of the bottom part 34 of the transverse elements 32, tensile forces are generated therein as well, in particular in a transition region between the bottom part 34 and the central part 35 thereof. Thus, the transverse elements 32 are not only subjected to wear, but due the said intermittent clamping thereof also to metal fatigue loading.

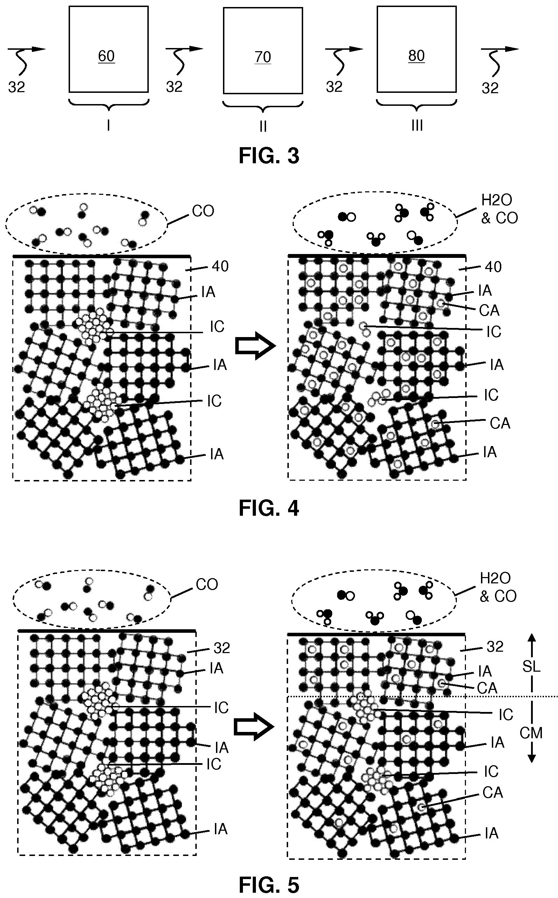

It is well-known and generally applied to manufacture the transverse elements 32 from steel, such as 75Cr1 (DIN 1.2003) steel, and to quench harden the steel as part of the overall production process of the drive belt 3. The conventional process step of quench hardening comprises three stages I, II and III that are schematically illustrated in figure 3. In stage I a batch of the (possibly only partially) pre-cut transverse elements 32 are heated in an oven chamber 60 to a temperature substantially above the austenitizing temperature of the steel in question in order to provide these with a crystalline structure of austenite. In this stage I, the transverse elements 32 are typically placed in a neutral gas atmosphere, such as nitrogen gas with hydrogen gas and some carbon monoxide. The amount of carbon monoxide is chosen such that the so-called carbon potential of the process atmosphere is essentially equal to the carbon content of the steel to be processed, such that this is neither enriched with nor depleted from carbon at the surface thereof. In stage II the batch of transverse elements 32 are quenched, i.e. are rapidly cooled to form a (metastable) microstructure largely composed of supersaturated martensitic crystals. In this stage II, the cooling of the transverse elements 32 is typically realized by immersing these in an oil bath 70. Thereafter, in stage III, the batch of transverse elements 32 are re-heated in an oven chamber 80, to increase the ductility and toughness thereof. The temperature applied in this stage III is much lower than that in stage I, e.g. is around 200 degrees Centigrade, such that it can take place without any protective atmosphere, i.e. in air.

In the art of the heat treatment of steel, it is also known to include a carbon-containing gas in the gas atmosphere in the oven chamber 60 during the austenitizing stage I, so called carburizing. Hereby, a surface layer of a steel work product 40 is enriched with carbon atoms, whereby the wear resistance thereof improves. This latter carburizing process is graphically illustrated in figure 4. The left side of figure 4 reflects the conditions at start of such process: carbon-monoxide molecules CO, represented by the pairs of black and white dots, are present in the gas atmosphere and crystals of iron atoms IA, represented by the solitary black dots, and iron-carbide particles IC, represented by the assembly of white dots, constitute the general crystal structure of the work product 40.

The conditions towards the end of the carburizing process are indicated on right side of figure 4. From figure 4 it appears that in the carburizing process at least some of the carbon-monoxide gas molecules CO present have decomposed into carbon and oxygen, whereof the carbon atoms CA enter into and become part of the microstructure of a work product 40 and whereof the oxygen atoms combine with hydrogen gas molecules to form water vapor H2O, represented by the triplets of two white and one black dots. Furthermore, the iron-carbide particles IC gradually have largely dissolved, whereby additional carbon atoms CA are released into the microstructure of the work product 40. Of course, by the application of heat and the passing of time in the carburizing process, also the crystalline structure wherein the iron atoms IA of the work product 40 are arranged has changed from ferrite to austenite, however, this particular aspect is not reflected in figure 4.

When the thus treated work product 40 is subsequently quenched, the carbon atoms are captured as interstitials in the supersaturated martensitic crystals. Hereby the hardness and wear resistance of the work product 40, in particular of the outer surface(s) thereof, is increased considerably, however, also is its brittleness, which makes the work product 40 unsuitable for applications requiring a considerable fatigue strength as well, such as the transverse element 32 of the drive belt 3.

According to the present disclosure, the above known carburizing process can unexpectedly be adapted in such a manner that it does become suitable for transverse elements 32, even to the extent that the fatigue strength thereof is increased rather than decreased. In particular according to the present disclosure, the dissolution of the iron carbides in the bulk material of the transverse element 32 is suppressed; such that a small but notional gradient in the concentration of dissolved carbon is realized from the surface of the transverse elements 32 towards the bulk or core material thereof. As a result of such dissolved carbon concentration gradient a compressive residual stress is realized in the surface material of the transverse elements 32, whereby the initiation of a fatigue fracture from a surface defect is suppressed. Furthermore, such concentration gradient of dissolved carbon effects a change in the material hardness of the transverse element 32 from a higher value at or near the surface thereof to a lower value at its core, which can be measured relatively easily.

The novel set-up of the carburizing process in accordance with the present disclosure is illustrated in figure 5. The left side of figure 5 corresponds to that of figure 4 and reflects the conditions at start of the carburizing process. However, in accordance with the present disclosure, carburizing is carried out in such a manner that during the carburizing process the dissolution of the iron carbide particles IC is reduced relative to conventional carburizing, as illustrated on the right side of figure 5. By this measure and by the introduction of carbon atoms CA from the gas atmosphere into a surface layer SL of the transverse elements 32, the said carbon concentration gradient is created from a higher concentration of carbon atoms in the said surface layer SL to a lower concentration of carbon atoms in the core material CM thereof.

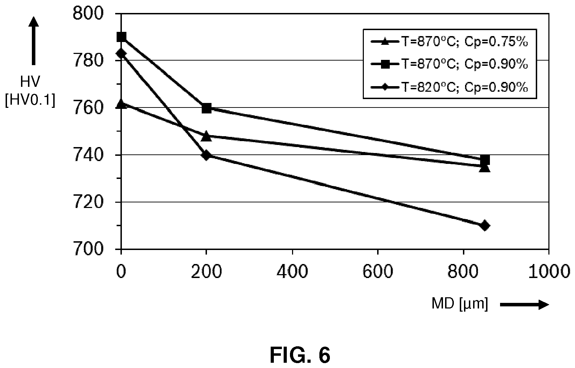

The presence of such carbon concentration gradient can be demonstrated by measuring and comparing the hardness HV of the transverse element 32 at its surface and more towards its core, i.e. in relation to the distance from the outer surface, denoted measurement depth MD. After all, it is well known that the presence of dissolved (atomic) carbon has the effect of increasing the hardness of steel. Figure 6 summarizes the results of such hardness measurements for three transverse elements 32 that are all made of 75Cr1 steel, but that are differently processed, with 3 hardness measurements for each such differently processed transverse elements 32: one at the surface thereof (MD=0), one at 200 microns below the outer surface (MD=200 micron) and a final one at a depth of 850 micron (MD=850 micron).

In figure 6 the three triangular shaped markers represent hardness values HV measured on a conventionally processed transverse element 32, i.e. a transverse element 32 that has been austenitized in a neutral gas atmosphere (i.e. with a carbon potential of 0.75% in case of 75Cr1 steel) at 870 °C. The thus measured hardness HV is relatively high (>735 Hv0.1), which hardness value HV is a/o due to the presence of dissolved carbon that has been released into the atomic iron lattice by the dissolution of iron carbides. However, since such dissolution basically occurs throughout the whole of the transverse element 32, as it heats up in the austenitizing furnace, the measured hardness HV doesn't show a big difference between the surface and at 850 micron depth, namely approximately 25 ΔHV0.1.

In figure 6 the three square shaped markers represent hardness values HV measured on a carburized transverse element 32, i.e. a transverse element 32 that has been austenitized at 870 °C and in a gas atmosphere with a carbon potential (i.e. 0.9%) above that of the steel in question. The thus measured core hardness HV (e.g. measured at 850 micron below the outer surface) is comparable with that of the conventionally processed transverse element 32, but the measured surface hardness HV is increased considerably by the introduction and diffusion of additional carbon atoms from the gas atmosphere. In particular, a difference in the hardness HV at the outer surface and at 850 micron depth of approximately 50 ΔHV0.1is observed.

In figure 6 the three diamond shaped markers represent hardness values HV measured on the transverse element 32 according to the present disclosure, in particular a transverse element 32 that has been austenitized in a gas atmosphere with a carbon potential (i.e. 0.9%) above that of the steel in question, however, only at the comparatively low temperature of 820 °C. The thus measured core hardness HV (e.g. measured at 850 micron below the outer surface) is much lower compared to both the conventionally processed transverse element 32 and to the carburized transverse element 32, which lower hardness value HV is due to the suppression of iron carbide dissolution by the much lower austenitizing temperature, whereas the measured surface hardness HV is comparable with that of the carburized transverse element 32 by the introduction and diffusion of additional carbon atoms from the gas atmosphere. In particular, a difference in the hardness HV at the outer surface and at 850 micron depth of approximately 72 ΔHV0.1 is observed.

According to the present disclosure, the thus measured hardness HV is representative of the concentration of dissolved carbon that -in case of the transverse element 32 in accordance with the present invention- is thus observed to show a considerable negative gradient from the surface material of transverse element 32 towards its core. Further according to the present disclosure, by such gradient, the surface material of the transverse element 32 is compressively stressed, whereby its fatigue strength is favorably increased. In particular, those parts of the transverse element 32 that are not (or at least to a lesser extend as compared to other parts thereof) stone tumbled will benefit from such improvement.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. Transverse element (32) for a drive belt (3) with an endless tensile element (31) and with a number of transverse elements slideably provided thereon for transmitting a drive power between two pulley (1, 2), which transverse element (32) is made of steel, **characterized in that** in a surface layer of the transverse element (32) the hardness (of the material) thereof decreases by between 60 and 90 HV0.1 from the surface towards the core of the transverse element (32).

2. The transverse element (32) according to claim 1, **characterized in that** the said hardness decreases by about 75 HV0.1 from the surface towards the core of the transverse element (32).

3. The transverse element (32) according to claim 1 or 2, **characterized in that** the said hardness decreases at the location of a transition between a bottom part (34) of the transverse element (32), located radially inside the endless tensile element (31), and a central part (35) of the transverse element (32), located at the same radial position as the endless tensile element (31).

4. The transverse element (32) according to claim 1, 2 or 3, **characterized in that** in a surface layer of the transverse element (32) a compressive residual stress is provided with a value in the range from minus 30 to minus 80 N/mm².

5. The transverse element (32) according to claim 4, **characterized in that** the said compressive residual stress value is about minus 50 N/mm².

6. The transverse element (32) according to claim 4 or 5, **characterized in that** the said compressive residual stress value occurs at the location of a transition between a bottom part (34) of the transverse element (32), located radially inside the endless tensile element (31), and a central part (35) of the transverse element (32), located at the same radial position as the endless tensile element (31).

7. The transverse element (32) according to a preceding claim, **characterized in that** the surface layer of the transverse segment has a hardness value in the range from 62 to 64 HRC.

8. The transverse element (32) according to a preceding claim, **characterized in that** the steel whereof the transverse element (32) is made has a carbon content of between 0.6% by weight and 1.2% by weight.

9. The transverse element (32) according to claim 8, **characterized in that** the transverse segment is made from 75Cr1 (DIN 1.2003) steel.

10. A drive belt (3) with an endless tensile element (31) and with a number of transverse elements (32) according to a preceding claim provided slideably on the endless tensile element (31) for transmitting a drive power between two pulley (1, 2).

11. A method for manufacturing steel transverse elements (32) for a drive belt (3) for transmitting a drive power between two pulley (1, 2) with an endless tensile element (31) and with a number of transverse elements (32) that are provided slideably on the endless tensile element (31), in which method the transverse elements (32) are hardened by subsequently austenitizing and quenching these, **characterized in that** the transverse elements (32) are austenitized in a carbon containing gas atmosphere having a carbon potential that exceeds a carbon content in weight-percent of the steel wherefrom the transverse elements (32) are made by between 10% and 30% and at a temperature of the carbon containing gas atmosphere exceeding an equilibrium austenite temperature of the said steel by between 2.5% and 10%.

12. The method for manufacturing steel transverse elements (32) according to claim 11, **characterized in that** the transverse elements (32) are austenitized for a druation of between 5 and 25 minutes.

## Patentansprüche

1. Querelement (32) für einen Antriebsriemen (3) mit einem endlosen Zugelement (31) und mit einer Anzahl von Querelementen, die gleitend auf demselben bereitgestellt sind, um eine Antriebskraft zwischen zwei Riemenscheiben (1, 2) zu übertragen, wobei das Querelement (32) aus Stahl hergestellt ist, **dadurch gekennzeichnet, dass** in einer Oberflächenschicht des Querelements (32) die Härte (des Materials) desselben von der Oberfläche zu dem Kern des Querelements (32) zwischen 60 und 90 HV0.1 abnimmt.

2. Querelement (32) nach Anspruch 1, **dadurch gekennzeichnet, dass** die Härte von der Oberfläche zu dem Kern des Querelements (32) um etwa 75 HV0.1 abnimmt.

3. Querelement (32) nach Anspruch 1 oder 2, **dadurch gekennzeichnet, dass** die Härte an der Stelle eines Übergangs zwischen einem radial innen von dem endlosen Zugelement (31) gelegenen unteren Teil (34) des Querelements und einem an der gleichen radialen Position wie das endlose Zugelement (31) gelegenen mittleren Teil (35) des Querelements (32) abnimmt.

4. Querelement (32) nach Anspruch 1, 2 oder 3, **dadurch gekennzeichnet, dass** in einer Oberflächenschicht des Querelements (32) eine Druckeigenspannung mit einem Wert im Bereich von minus 30 bis minus 80 N/mm² vorgesehen ist.

5. Querelement (32) nach Anspruch 4, **dadurch gekennzeichnet, dass** der Wert der Druckeigenspannung bei etwa minus 50 N/mm² liegt.

6. Querelement (32) nach Anspruch 4 oder 5, **dadurch gekennzeichnet, dass** der Wert der Druckeigenspannung an der Stelle eines Übergangs zwischen einem radial innen von dem endlosen Zugelement (31) gelegenen unteren Teil (34) des Querelements (32) und einem an der gleichen radialen Position wie das endlose Zugelement (31) gelegenen mittleren Teil (35) des Querelements (32) auftritt.

7. Querelement (32) nach einem der vorhergehenden Ansprüche, **dadurch gekennzeichnet, dass** die Oberflächenschicht des Quersegments einen Härtewert im Bereich von 62 bis 64 HRC aufweist.

8. Querelement (32) nach einem der vorhergehenden Ansprüche, **dadurch gekennzeichnet, dass** der Stahl, aus dem das Querelement (32) hergestellt ist, einen Kohlenstoffgehalt zwischen 0,6 Gewichtsprozent und 1,2 Gewichtsprozent aufweist.

9. Querelement (32) nach Anspruch 8, **dadurch gekennzeichnet, dass** das Quersegment aus Stahl 75Cr1 (DIN 1.2003) hergestellt ist.

10. Antriebsriemen (3) mit einem endlosen Zugelement (31) und mit einer Anzahl von Querelementen (32) nach einem der vorhergehenden Ansprüche, die gleitend auf dem endlosen Zugelement (31) bereitgestellt sind, um eine Antriebskraft zwischen zwei Riemenscheiben (1, 2) zu übertragen.

11. Verfahren zur Herstellung von Stahlquerelementen (32) für einen Antriebsriemen (3) zum Übertragen einer Antriebskraft zwischen zwei Riemenscheiben (1, 2) mit einem endlosen Zugelement (31) und mit einer Anzahl von Querelementen (32), die gleitend auf dem endlosen Zugelement (31) bereitgestellt sind, wobei bei dem Verfahren die Querelemente (32) durch anschließendes Austenitisieren und Abschrecken derselben gehärtet werden, **dadurch gekennzeichnet, dass** die Querelemente (32) in einer kohlenstoffhaltigen Gasatmosphäre, die einen Kohlenstoffpegel aufweist, der einen Kohlenstoffgehalt des Stahls, aus dem die Querelemente (32) hergestellt sind, um zwischen 10% und 30% Gewichtsprozent übersteigt, und bei einer Temperatur der kohlenstoffhaltigen Gasatmosphäre, die eine Austenitgleichgewichtstemperatur des Stahls um zwischen 2,5% und 10% übersteigt, austenitisiert werden.

12. Verfahren zur Herstellung von Stahlquerelementen (32) nach Anspruch 11, **dadurch gekennzeichnet, dass** die Querelemente (32) für eine Dauer zwischen 5 und 25 Minuten austenitisiert werden.

## Revendications

1. Élément transversal (32) pour une courroie de transmission (3) ayant un élément de traction sans fin (31) et un certain nombre d'éléments transversaux disposés de manière coulissante sur celui-ci pour transmettre une puissance d'entraînement entre deux poulies (1, 2), l'élément transversal (32) étant constitué d'acier, **caractérisé en ce que** dans une couche de surface de l'élément transversal (32) la dureté (du matériau) de celle-ci diminue de 60 à 90 HV0.1 depuis la surface vers le noyau de l'élément transversal (32).

2. Élément transversal (32) selon la revendication 1, **caractérisé en ce que** ladite dureté diminue d'environ 75 HV0.1 depuis la surface vers le noyau de l'élément transversal (32).

3. Élément transversal (32) selon la revendication 1 ou 2, **caractérisé en ce que** ladite dureté diminue au niveau de l'emplacement d'une transition entre une partie inférieure (34) de l'élément transversal (32), placée radialement à l'intérieur de l'élément de traction sans fin (31), et une partie centrale (35) de l'élément transversal (32), placée à une même position radiale que l'élément de traction sans fin (31).

4. Élément transversal (32) selon la revendication 1, 2 ou 3, **caractérisé en ce que** dans une couche de surface de l'élément transversal (32), une contrainte résiduelle de compression est prévue, d'une valeur dans la plage de moins 30 à moins 80 N/mm².

5. Élément transversal (32) selon la revendication 4, **caractérisé en ce que** ladite valeur de contrainte résiduelle de compression est d'environ moins 50 N/mm².

6. Élément transversal (32) selon la revendication 4 ou 5, **caractérisé en ce que** ladite valeur de contrainte résiduelle de compression se produit au niveau de l'emplacement d'une transition entre une partie inférieure (34) de l'élément transversal (32), placée radialement à l'intérieur de l'élément de traction sans fin (31), et une partie centrale (35) de l'élément transversal (32), placée à la même position radiale que l'élément de traction sans fin (31).

7. Élément transversal (32) selon une revendication précédente, **caractérisé en ce que** la couche de surface du segment transversal a une valeur de dureté dans la plage de 62 à 64 HRC.

8. Élément transversal (32) selon une revendication précédente, **caractérisé en ce que** l'acier constituant l'élément transversal (32) a une teneur en carbone comprise entre 0,6 % en poids et 1,2 % en poids.

9. Élément transversal (32) selon la revendication 8, **caractérisé en ce que** le segment transversal est constitué d'acier 75Cr1 (DIN 1.2003).

10. Courroie de transmission (3) avec un élément de traction sans fin (31) et avec un certain nombre d'éléments transversaux (32) selon une revendication précédente, disposés de manière coulissante sur l'élément de traction sans fin (31) pour transmettre une puissance d'entraînement entre deux poulies (1, 2).

11. Procédé de fabrication d'éléments transversaux en acier (32) pour une courroie de transmission (3) pour transmettre une puissance d'entraînement entre deux poulies (1, 2) avec un élément de traction sans fin (31) et avec un certain nombre d'éléments transversaux (32) qui sont disposés de manière coulissante sur l'élément de traction sans fin (31), les éléments transversaux (32) étant durcis par successivement austénitisation et trempe de ceux-ci, **caractérisé en ce que** les éléments transversaux (32) sont austénitisés dans une atmosphère gazeuse contenant du carbone ayant un potentiel carbone qui dépasse une teneur en carbone de pourcentage en poids de l'acier, dont les éléments transversaux (32) sont constitués, de 10 à 30 %, et à une température de l'atmosphère gazeuse contenant du carbone dépassant une température austénitique à l'équilibre dudit acier de 2,5 % à 10 %.

12. Procédé de fabrication d'éléments transversaux en acier (32) selon la revendication 11, **caractérisé en ce que** les éléments transversaux (32) sont austénitisés pendant une durée comprise entre 5 et 25 minutes.
